(19) Europäisches Patentamt

European Patent Office

Office européen des brevets

(11) **EP 1 380 035 B1**

(12) **EUROPEAN PATENT SPECIFICATION**

(45) Date of publication and mention
of the grant of the patent:
**17.05.2006 Bulletin 2006/20**

(51) Int Cl.:
***H01B 3/30*** (2006.01)

(21) Application number: **02705655.5**

(86) International application number:
**PCT/SE2002/000489**

(22) Date of filing: **15.03.2002**

(87) International publication number:
**WO 2002/086912 (31.10.2002 Gazette 2002/44)**

(54) **OPTICAL FIBRE SUBMARINE REPEATER CABLE WITH COMBINED INSULATION/JACKET AND COMPOSITION THEREFOR**

FASEROPTISCHES UNTERWASSER-ZWISCHENVERSTÄRKERKABEL MIT ISOLATIONS-/ MANTELKOMBINATION UND ZUSAMMENSETZUNG DAFÜR

CABLE REPETEUR IMMERGE A FIBRES OPTIQUES, DOTE D'UNE COMBINAISON REVETEMENT ISOLANT/GAINE, ET COMPOSITION ASSOCIEE

(84) Designated Contracting States:
**AT BE CH CY DE DK ES FI FR GB GR IE IT LI LU MC NL PT SE TR**

(30) Priority: **19.04.2001 SE 0101361**

(43) Date of publication of application:
**14.01.2004 Bulletin 2004/03**

(73) Proprietor: **Borealis Technology Oy
06101 Porvoo (FI)**

(72) Inventors:
• **MARTINSSON, Hans-Bertil
  S-472 95 Varekil (SE)**

• **LAURENSON, Paul
  B-1000 Bruxelles (BE)**
• **HAMPTON, Robert, Nigel
  SE-444 46 STENUNGSUND (SE)**

(74) Representative: **Stenbäck, Maria Elisabeth et al
Awapatent AB,
P.O. Box 5117
200 71 Malmö (SE)**

(56) References cited:
  **WO-A1-97/03124        WO-A1-99/65039**

## Description

Field of the invention

The present invention relates to an optical fibre submarine repeater cable with combined insulation/jacket and to a composition therefor.

Technical background

Submarine communication cables have been used for more than 150 years. Previously such cables have transmitted the information as electric signals, but more recently optical fibre cables which transmit the information as optical signals have come into increasing demand.

Generally, an optical fibre submarine cable comprise a bundle of optical fibres, usually up to about 15-20 fibres, protected by a surrounding insulation and an external jacket. To provide sufficient mechanical strength to the cable it is usually armoured, i.e. it includes metallic wires, preferably steel wires incorporated in the construction such that these may surround the bundle of optical fibres.

In an optical fibre submarine cable that covers large distances such as between two continents, the optical signal is gradually attenuated with increasing distance. To overcome this the signal is amplified at certain intervals such as each 10 to 12 kilometers. The amplification of the signal is done by underwater amplifiers called repeaters. One repeater is provided in association with the optical fibre cable every 10 to 12 kilometer. Such cables are called optical fibre submarine repeater cables. The repeaters are powered by direct current (DC), typically with a maximum voltage of about 10 kV, from the ends of the system. To feed the repeaters with DC a separate DC cable is needed.

However, instead of providing a separate DC cable in addition to the submarine optical fibre cable, the DC cable is integrated with the optical fibre cable by providing the optical fibre cable with a central high voltage conductor in the form of a conducting metal tube, preferably of copper, that surrounds and protects the optical fibre bundle. The previously mentioned wire armour is arranged on the outside of the copper tube and the whole aggregate is surrounded by an insulating layer and an external jacket that may be combined into one single combined insulation/jacket layer.

In addition to being able to transmit optical signals over large distances an optical fibre submarine repeater cable must possess several other critical characteristics to cope with the rigours of manufacture, installation and operation of the cable.

Thus, during the laying of a submarine cable from a vessel it is subjected to severe mechanical stress. More particularly, a cable that is coiled horizontally on board the vessel is twisted when it is pulled by a caterpillar and metered out into the sea. The cable then sinks by gravity to the bottom of the sea. In order to stay securely on the bottom of the sea the buoyancy of the cable should be as low as possible. Further, the cable must have a good resistance to abrasion such as against rocks and movement due to sand erosion. The cable should, of course, also be resistant to corrosion by salt water.

These are very demanding requirements. To fulfil them the insulation/jacket composition should possess a combination of important properties. Thus, for ease of manufacture it should have a good processability, i.e. be easy to extrude. To withstand stress and environmental influence during use of the cable the composition should have a high Environmental Stress Cracking Resistance (ESCR); to prevent corrosion by salt water of the metal parts of the cable the composition should have good barrier properties; to withstand the wear and tear during the laying and use of the cable the composition should have a high abrasion resistance. Further, to impart good electrical characteristics to the cable the composition should have a high cleanliness, i.e. a low content of extraneous material such as particles. Further, the cable should be designed for a service life of more than 20 years. This poses a technological challenge in that a single rupture of the combined insulation/jacket causes malfunction of the whole length. Consequently, the damaged area must be recovered from the seabed and repair effected on the high seas before the system can be returned to service.

The dimensions of the combined insulation and jacket are determined by the level of mechanical protection required, the voltage employed and the handling characteristics of the completed cable, including the characteristics for storage and laying. Generally, the combined insulation/jacket has a thickness of about 3-7 mm, usually about 5 mm and is made of an unimodal polyethylene, more particularly high density polyethylene (HDPE).

There is a need to increase the maximum possible length of an optical fibre submarine repeater cable. Such increase in length increases the transmission voltage loss incurred through the small, but finite, resistance of the central copper conductor. To compensate and achieve the minimum voltage needed at the most remote repeater the input voltage level needs to be increased.

However, with present technology, when increasing the voltage level a commensurate increase in insulation thickness is required. As an example a twofold increase in length might necessitate a twofold increase in voltage leading to a twofold increase in insulating thickness if existing design stresses are used. The resulting increase in volume of cable leads to a reduction in the length that it is possible to store within the cable-laying vessel. The handling of the cable will be further complicated by the resultant increase in minimum bending radii (of the order of 10-20 times the cable diameter) and the increased buoyancy in seawater (the insulation/jacket comprises a polymer of a density of less than 1 g/cm$^3$ and the greater the proportion of insulation/jacket the greater the buoyancy of the cable will be).

There is thus a demand for an optical fibre submarine repeater cable which allows an increased maximum cable length without compromising other characteristics of the cable.

Summary of the invention

It is an object of the present invention to eliminate or alleviate the above-mentioned problem and provide an optical fibre submarine repeater cable that has excellent characteristics and allows an increase in the maximum cable length, i.e. the total length of the repeater chain.

It has been found that the above object may be achieved by replacing the conventional unimodal ethylene polymer of the insulating/jacket layer with a multimodal, such as a bimodal polyolefin.

The present invention thus provides an optical fibre submarine repeater cable with combined insulation/jacket, characterised in that the combined insulation/jacket comprises a multimodal polyolefin with a density of 0.910-0.960 $g/cm^3$ and an $MFR_2$ of 0.2-6.0 g/10 min, and that the combined insulation/jacket is free from particles with a dimension larger than 0.5 mm in a 1 kg sample of material.

The present invention further provides a composition for a combined insulation/jacket of an optical fibre submarine repeater cable, characterised in that it comprises a multimodal polyolefin with a density of 0.910-0.960 $g/cm^3$ and an $MFR_2$ of 0.2-6.0 g/10 min, and that it is free from particles with a dimension larger than 0.5 mm in a 1 kg sample of material.

Further distinctive features and advantages of the present invention will appear from the following description and the appended claims.

Detailed description of the invention

In order to facilitate the understanding of the present invention a detailed description will be given below.

First, though, some terms and expression used in the specification and claims will be defined.

By the "modality" of a polymer is meant the structure of the molecular-weight distribution of the polymer, i.e. the appearance of the curve indicating the number of molecules as a function of the molecular weight. If the curve exhibits one maximum, the polymer is referred to as "unimodal", whereas if the curve exhibits a very broad maximum or two or more maxima and the polymer consists of two or more fractions, the polymer is referred to as "bimodal", "multimodal" etc. In the following, all polymers whose molecular-weight-distribution curve is very broad or has more than one maximum are jointly referred to as "multimodal".

The processability is defined herein in terms of the extruder output in kg/h at a given pressure in MPa.

The extruder used is a single screw one of type Nokia-Maillefer with an L/D ratio of 24/1 and diameter 60 mm, run at 180°C. It is an advantage if the output is as high as possible at a given extruder pressure.

The Environmental Stress Cracking Resistance (ESCR), i.e. the resistance of the polymer to the formation of cracks under the action of mechanical stress and a reagent in the form of a surfactant, is determined in accordance with ASTM D 1693 A, the reagent employed being 10% Igepal CO-630. The results are indicated as the percentage of cracked sample rods after a given time in hours. F20 means e.g. that 20% of the sample rods were cracked after the time indicated.

The "melt flow rate" (MFR) is determined in accordance with ISO 1133 and is equivalent to the term "melt index" previously used. The melt flow rate, which is indicated in g/10 min, is an indication of the flowability, and hence the processability, of the polymer. The higher the melt flow rate, the lower the viscosity of the polymer. The melt flow rate is determined at 190°C and at a loading of 2,1 kg ($MFR_2$; ISO 1133, condition D).

The barrier properties are determined in terms of the water vapour transmission rate according to ASTM F 1249.

The abrasion resistance is determined as Shore D hardness according to DIN 53505 (3 sec).

As a measure of the strength of the polymer its yield strength as well as its elongation at yield at an extension of 50 mm/min are determined according to ISO 527.

As indicated in the foregoing, the combined insulation/jacket of the present invention is distinguished by the fact that it comprises a multimodal polyolefin. By "polyolefin" is meant an olefin homopolymer or copolymer. The olefin monomer is preferably selected from ethylene or propylene. The comonomer is preferably selected from α-olefins having 3-12 carbon atoms, more preferably 1-butene, 1-hexene, 4-methyl-1-pentene, and 1-octene, when the olefin monomer is ethylene. When the olefin monomer is propylene the comonomer is preferably selected from ethylene and α-olefins having 4-12 carbon atoms, more preferably ethylene, 1-butene, 1-hexene, 4-methyl-1-pentene, and 1-octene.

By "polyethylene" or "ethylene (co)polymer" is meant an ethylene homopolymer or copolymer. Similarly, by "polypropylene" or "propylene (co)polymer" is meant a propylene homopolymer or copolymer.

It is previously known to produce multimodal, in particular bimodal, polyolefins, preferably multimodal polyethylene, in two or more reactors connected in series. As instances of this prior art, mention may be made of EP 040 992, EP 041 796, EP 022 376 and WO 92/12182, which are hereby incorporated by way of reference as regards the production of multimodal polymers. According to these references, each and every one of the polymerisation stages can be carried out in liquid phase, slurry or gas phase.

According to the present invention, the main polymerisation stages are preferably carried out as a combination of slurry polymerisation/gas-phase polymerisation or gas-phase polymerisation/gas-phase polymerisation. The slurry polymerisation is preferably performed in a so-called loop reactor. The use of slurry polymerisation in a stirred-tank reactor is not preferred in the present invention, since such a method is not sufficiently flexible for the production of the inventive composition and involves solubility problems. In order to produce the inventive composition of improved properties, a flexible method is required. For this reason, it is preferred that the composition is produced in at least two main polymerisation stages in a combination of loop reactor/gas-phase reactor or gas-phase reactor/gas-phase reactor. It is especially preferred that the composition is produced in two main polymerisation stages, in which case the first stage is performed as slurry polymerisation in a loop reactor and the second stage is performed as gas-phase polymerisation in a gas-phase reactor. Optionally, the main polymerisation stages may be preceded by a prepolymerisation, in which case up to 20% by weight, preferably 1-10% by weight, of the total amount of polymers is produced. Generally, this technique results in a multimodal polymer mixture through polymerisation with the aid of a Single Site or Ziegler-Natta catalyst in several successive polymerisation reactors. In the production of, say, a bimodal polyethylene, which according to the invention is the preferred polymer, a first polyethylene fraction is produced in a first reactor under certain conditions with respect to monomer composition, hydrogen-gas pressure, temperature, pressure, and so forth. After the polymerisation in the first reactor, the reaction mixture including the polymer produced is fed to a second reactor, where further polymerisation takes place under other conditions. Usually, a first polymer fraction of high melt flow rate (low molecular weight) and with a moderate or small addition of comonomer, or no such addition at all, is produced in the first reactor, whereas a second polymer fraction of low melt flow rate (high molecular weight) and with a greater addition of comonomer is produced in the second reactor. As comonomer, use is commonly made of other olefins having up to 12 carbon atoms, such as α-olefins having 3-12 carbon atoms, e.g. propene, butene, 4-methyl-1-pentene, hexene, octene, decene, etc., in the copolymerisation of ethylene. The resulting end product consists of an intimate mixture of the polymer fractions from the two reactors, the different molecular-weight-distribution curves of these polymer fractions together forming a molecular-weight-distribution curve having a broad maximum or two maxima, i.e. the end product is a bimodal polymer mixture. Since multimodal, and especially bimodal, polymers, preferably ethylene polymers, and the production thereof belong to the prior art, no detailed description is called for here, but reference is had to the above specifications.

It should be pointed out that, in the production of two or more polymer fractions in a corresponding number of reactors connected in series, it is only in the case of the fraction produced in the first reactor stage and in the case of the end product that the melt flow rate, the density and the other properties can be measured directly on the material removed. The corresponding properties of the polymer fractions produced in reactor stages following the first stage can only be indirectly determined on the basis of the corresponding values of the materials introduced into and discharged from the respective reactor stages.

Even though multimodal polymers and their production are known per se, it is not, however, previously known to use such multimodal polymers as the composition of a combined insulation/jacket of an optical fibre submarine repeater cable. Above all, it is not previously known to use in this context multimodal polyolefins having the specific values of density, melt flow rate and cleanliness as are required in the present invention.

As hinted at above, it is preferred that the multimodal polyolefin in the combined insulation/jacket according to the invention is a bimodal polyolefin. It is also preferred that this bimodal polyolefin has been produced by polymerisation as above under different polymerisation conditions in two or more polymerisation reactors connected in series. Owing to the flexibility with respect to reaction conditions thus obtained, it is most preferred that the polymerisation is carried out in a loop reactor/a gas-phase reactor, a gas-phase reactor/a gas-phase reactor or a loop reactor/a loop reactor as the polymerisation of one, two or more olefin monomers, the different polymerisation stages having varying comonomer contents. Preferably, the polymerisation conditions in the preferred two-stage method are so chosen that a comparatively low-molecular polymer fraction having a moderate, low or, which is preferred, no content of comonomer is produced in one stage, preferably the first stage, owing to a high content of chain-transfer agent (hydrogen gas), whereas a high-molecular polymer fraction having a higher content of comonomer is produced in another stage, preferably the second stage. The order of these stages may, however, be reversed.

Preferably, the multimodal polyolefin in accordance with the invention is a multimodal polypropylene or, which is most preferred, a multimodal polyethylene.

In view of the above, a preferred multimodal polyethylene according to the invention consists of a low-molecular ethylene homopolymer mixed with a high-molecular copolymer of ethylene and butene, 4-methyl-1-pentene, 1-hexene or 1-octene.

It is particularly preferred that the properties of the individual polymers in the multimodal polyolefin according to the invention should be so chosen that the final multimodal polyolefin has a density of about 0.915-0.955 $g/cm^3$, preferably about 0.920-0.950 $g/cm^3$, and a melt flow rate of about 0.2-3.0 g/10 min, preferably about 0.2-2.0 g/10 min. According to the invention, this is preferably achieved by the multimodal polyolefin comprising a first polyolefin fraction having a density of about 0.930-0.975 $g/cm^3$, preferably about 0.955-0.975 $g/cm^3$,

and a melt flow rate of about 50-2000 g/10 min, preferably about 100-1000 g/ 10 min, and most preferred about 200-600 g/10 min, and at least a second polyolefin fraction having such a density and such a melt flow rate that the multimodal polyolefin obtains the density and the melt flow rate indicated above.

If the multimodal polyolefin is bimodal, i.e. is a mixture of two polyolefin fractions (a first olefin polymer and a second olefin polymer), the first polyolefin fraction being produced in the first reactor and having the density and the melt flow rate indicated above, the density and the melt flow rate of the second polyolefin fraction, which is produced in the second reactor stage, may, as indicated in the foregoing, be indirectly determined on the basis of the values of the materials supplied to and discharged from the second reactor stage.

In the event that the multimodal polyolefin and the first polyolefin fraction have the above values of density and melt flow rate, a calculation indicates that the second polyolefin fraction produced in the second stage should have a density in the order of about 0.88-0.93 $g/cm^3$, preferably 0.91-0.93 $g/cm^3$, and a melt flow rate in the order of about 0.01-0.8 g/10 min, preferably about 0.05-0.3 g/ 10 min.

As indicated in the foregoing, the order of the stages may be reversed, which would mean that, if the final multimodal polyolefin has a density of about 0.915-0.955 $g/cm^3$, preferably about 0.920-0.950 $g/cm^3$, and a melt flow rate of about 0.2-3.0 g/10 min, preferably about 0.2-2.0 g/10 min, and the first polyolefin fraction produced in the first stage has a density of about 0.88-0.93 $g/cm^3$, preferably about 0.91-0.93 $g/cm^3$, and a melt flow rate of 0.01-0.8 g/10 min, preferably about 0.05-0.3 g/10 min, then the second polyolefin fraction produced in the second stage of a two-stage method should, according to calculations as above, have a density in the order of about 0.93-0.975 $g/cm^3$, preferably about 0.955-0.975 $g/cm^3$, and a melt flow rate of 50-2000 g/ 10 min, preferably about 100-1000 g/10 min, and most preferred about 200-600 g/10 min. This order of the stages in the production of the olefin polymer mixture according to the invention is, however, less preferred.

In order to optimise the properties of the combined insulation/jacket composition according to the invention, the individual polymer fractions in the multimodal polyolefin should be present in such a weight ratio that the aimed-at properties contributed by the individual polymer fractions are also achieved in the final olefin multimodal polyofin. As a result, the individual polymer fractions should not be present in such small amounts, such as about 10% by weight or below, that they do not affect the properties of the multimodal polyolefin. To be more specific, it is preferred that the amount of polyolefin fraction having a high melt flow rate (low-molecular weight) makes up at least 25% by weight but no more than 75% by weight of the multimodal polyolefin, preferably 35-55% by weight of the multimodal polyolefin, thereby to optimise the properties of the end product.

An important characteristic of the combined insulation/jacket and more particularly the multimodal polyolefin thereof according to the present invention is its high cleanliness. A high cleanliness contributes to good electric properties of the combined insulation/jacket such that it can withstand a high operating stress in terms of electric field before electrical breakdown occurs. While the current combined insulation/jacket materials of optical fibre submarine repeater cables typically withstand a maximum electrical field level of about 2 kV/mm, it is contemplated that this level could be increased to about 10 kV/mm with the combined insulation/jacket having the new clean multimodal polyolefin material of the present invention. This means that with a maintained thickness of the combined insulation/jacket of about 5 mm the voltage can be increased to about 50 kV and thus the maximum or total distance might be increased 5-fold. This constitutes a significant technical progress in the field of optical fibre submarine repeater cables.

As stated earlier, the combined insulation/jacket comprises the above defined multimodal polyolefin. This means that the combined insulation/jacket is substantially made up of the multimodal polyolefin. Preferably, the combined insulation/jacket consists of the multimodal polyolefin. In any case the cleanliness of the multimodal polyolefin is decisive for the cleanliness of the combined insulation/jacket.

The cleanliness of the multimodal polyolefin material of the present invention is a critical characteristic and is defined in terms of lack of contaminants in the material. A contaminant is a particle with any dimension larger than 70 $\mu$m not inherent in the product formulation. Also oxidised polyolefin particles larger than 100 $\mu$m are considered contaminants if they show a sharp edge to the surroundings. As mentioned earlier, the multimodal polyolefin should be free of particles larger than 0.5 mm in a 1 kg sample of material. Preferably, a 1 kg sample of the multimodal polyolefin is free from particles with any dimension larger than 0.2 mm, more preferably 0.1 $\mu$m, in which case the multimodal polyolefin is referred to as superclean.

The determination of the cleanliness of the multimodal polyolefin can be made by extruding a 0.5 mm thick tape of the multimodal polyolefin and examining the tape with an automatic contamination detector based on a light source and a sensitive detector. When a contaminant is recorded the tape is automatically marked in the vicinity of the contaminant. After the extrusion is completed the tape is manually inspected for contamination indications and each contaminant is individually characterised and measured. The longest dimension of each contaminant is measured by using a measuring-microscope at approximately 100x magnification. Each inspected tape volume should have a weight of 1 kg.

When testing a preferred multimodal polyethylene for a combined insulation/jacket of the present invention having an $MFR_2$ of 1.7 g/10 min and a density of 0.942 $g/cm^3$ the tapes showed the following cleanliness:

Tape 1: 0 particles with a dimension larger than 0.5 mm, 0 particles with a dimension of 0.2-0.5 mm, and 1 particle with a dimension of 0.1-0.2 mm;

Tape 2: 0 particles with a dimension larger than 0.5 mm, 0 particles with a dimension of 0.2-0.5 mm, and 2 particles with a dimension of 0.1-0.2 mm.

According to a particularly preferred aspect of the present invention the required cleanliness of the multimodal polyolefin may be secured and/or increased by filtering the multimodal polyolefin after the production thereof. This is achieved by passing the multimodal polyolefin through a filter with 40-250 $\mu$m, preferably 40-100 $\mu$m filter openings. The filtering is preferably carried out by extruding the multimodal polyolefin through an extruder with an appropriate filter attached to the die. The filter may be of a fixed type, i.e. permanently secured to the extruder die, or of a changing type, i.e. two alternating filters, a filter that moves continuously past the die, or any other type of commercial filter.

It is understood that the filtering of the multimodal polyolefin of the invention is facilitated by the good processability thereof. While a conventional unimodal polyethylene for a combined insulation/jacket has a processability, as defined above, of about 20 kg/h at an extruder pressure of about 25 MPa, a preferred multimodal polyethylene for a combined insulation/jacket of the present invention having an $MFR_2$ of 1.7 g/10 min and a density of 0.942 g/cm³ has an output of about 60 kg/h at an extruder pressure of about 25 MPa. With a view to achieve good processability it is preferred that the multimodal polyolefin has an $MFR_2$ of at least 1.5 g/10 min. This also facilitates the filtering of the multimodal polyolefin described above.

As part of the cleanliness of the multimodal polyolefin of the invention is the fact that, except for conventional stabilisers such as antioxidants and light stabilisers, it does not contain any additives. The stabilisers in the multimodal polyolefin of the invention are added in conventional amounts of at most about 1 % by weight, preferably at most about 0.5 % by weight, and most preferred about 0.1 % by weight of the multimodal polyolefin.

Another important aspect of the multimodal polyolefin of the combined insulation/jacket of the invention is that it should have a good Environmental Stress Cracking Resistance (ESCR) as defined above. Thus, the multimodal polyolefin of the present invention preferably has the following ESCR properties: F10 > 1500 h, more preferably > 8000 h; F1 > 700 h, more preferably > 3000 h.

As indicated previously, the composition of the present invention should have good barrier properties in order to prevent corrosion by salt water of the metal parts of the cable. More particularly, it is preferred that the composition has a water vapour transmission rate of less than 4.5 g/m²/24 h, determined according to ASTM F 1249.

Also, a good abrasion resistance is important to the cable according to the invention. It is preferred that the composition of the cable of the present invention has an abrasion resistance, determined according to DIN 53505 as Shore D hardness (3 sec) of over 55. Moreover, the ratio of the Shore D hardness at 1 sec to the Shore D hardness at 3 sec, i.e.

$$\frac{\text{Shore D (1 sec)}}{\text{Shore D (3 sec)}}$$

should preferably be more than 1.05.

A further important property of the composition of the cable of the present invention is its strength, determined as yield strength and elongation at yield at 50 mm/min. Preferably, the yield strength is over 18 MPa and the elongation at yield is over 10%.

**Claims**

1. An optical fibre submarine repeater cable with combined insulation/jacket, **characterised in that** the combined insulation/jacket comprises a multimodal polyolefin with a density of 0.910-0.960 g/cm³ and an $MFR_2$ of 0.2-6.0 g/10 min, and that the combined insulation/jacket is free from particles with a dimension larger than 0.5 mm in a 1 kg sample of material.

2. A cable as claimed in claim 1, wherein the multimodal polyolefin has been filtered through a filter with 40-250 $\mu$m filter openings.

3. A cable as claimed in claim 1 or 2, wherein the multimodal polyolefin is selected from ethylene and propylene (co)polymers.

4. A cable as claimed in any one of claims 1-3, wherein the multimodal polyolefin is bimodal.

5. A cable as claimed in any one of claims 1-4, wherein the multimodal polyolefin has been obtained by polymerisation of at least one olefin in at least two stages and has a density of 0.915-0.955 g/cm³ and a melt flow rate ($MFR_2$) of 0.2-3.0 g/10 min, and that the multimodal polyolefin comprises at least a first and a second polyolefin fraction, of which the first fraction has either (a) a density of 0.930-0.975 g/cm³ and a melt flow rate ($MFR_2$) of 50-2000 g/10 min, or (b) a density of 0.88-0.93 g/cm³ and a melt flow rate ($MFR_2$) of 0.01-0.8 g/10 min.

6. A cable as claimed in claim 5, wherein the multimodal polyolefin has a density of 0.920-0.950 g/cm³ and a $MFR_2$ of 0.2-2.0 g/10 min, and that the first polyolefin fraction has a density of 0.955-0.975 g/cm³ and a $MFR_2$ of 100-1000 g/10 min.

**7.** A cable as claimed in claim 5 or 6, wherein the multimodal polyolefin has been obtained by coordination-catalysed polymerisation in at least two stages of ethylene together with an α-olefin comonomer having 3-12 carbon atoms in at least one of the stages.

**8.** A cable as claimed in claim 7, wherein the comonomer is selected from the group consisting of 1-butene, 1-hexene, 4-methyl-1-pentene, and 1-octene.

**9.** A cable as claimed in claim 8, wherein the polymerisation stages have been carried out as slurry polymerisation, gas-phase polymerisation, or a combination thereof.

**10.** A cable as claimed in claim 9, wherein the polymerisation has been carried out in a loop-reactor/gas-phase-reactor process in at least one loop reactor followed by at least one gas-phase reactor.

**11.** A cable as claimed in any one of the preceding claims, wherein the multimodal polyolefin has an environmental stress cracking resistance (ESCR) according to ASTM D 1693 A/10% Igepal, of F10 > 8000 h, F1 > 700 h.

**12.** A composition for a combined insulation/jacket of an optical fibre submarine repeater cable, **characterised in that** it comprises a multimodal polyolefin with a density of 0.910-0.960 g/cm$^3$ and an MFR$_2$ of 0.2-6.0 g/10 min, and that it is free from particles with a dimension larger than 0.5 mm in a 1 kg sample of material.

**13.** A composition as claimed in claim 12, wherein the multimodal polyolefin has been filtered through a filter with 40-250 µm filter openings.

**14.** A composition as claimed in claim 12 or 13, wherein the multimodal polyolefin has been obtained by polymerisation of at least one olefin in at least two stages and has a density of 0.915-0.955 g/cm$^3$ and a melt flow rate (MFR$_2$) of 0.1-3.0 g/10 min, and that the multimodal polyolefin comprises at least a first and a second polyolefin fraction, of which the first fraction has either (a) a density of 0.930-0.975 g/cm$^3$ and a melt flow rate (MFR$_2$) of 50-2000 g/10 min, or (b) a density of 0.88-0.93 g/cm$^3$ and a melt flow rate (MFR$_2$) of 0.01-0.8 g/10 min.

**15.** A composition as claimed in any one of claims 12-14, wherein the multimodal polyolefin is selected from ethylene and propylene (co)polymers.

**16.** A composition as claimed in any one of claims 12-15, wherein the multimodal polyolefin is bimodal.

**Patentansprüche**

**1.** Optisches Unterwasser-Verstärkerkabel mit einer Isolations/Mantel-Kombination, **dadurch gekennzeichnet, daß** die Isolations/Mantel-Kombination ein multimodales Polyolefin mit einer Dichte von 0,910 bis 0,960 g/cm$^3$ und einer MFR$_2$ von 0,2 bis 6,0 g/10 min umfaßt und daß die Isolations/Mantel-Kombination frei von Partikeln mit einer Abmessung von mehr als 0,5 mm in einer 1 kg Probe des Materials ist.

**2.** Kabel nach Anspruch 1, wobei das multimodale Polyolefin durch einen Filter mit 40 bis 250 µm Filteröffnungen filtriert worden ist.

**3.** Kabel nach Anspruch 1 oder 2, wobei das multimodale Polyolefin aus Ethylen- und Propylen-(Co)polymeren ausgswählt ist.

**4.** Kabel nach einem der Ansprüche 1 bis 3, wobei das multimodale Polyolefin bimodal ist.

**5.** Kabel nach einem der Ansprüche 1 bis 4, wobei das multimodale Polyolefin durch Polymerisation von zumindest einem Olefin in zumindest zwei Stufen erhalten worden ist und eine Dichte von 0,915 bis 0,955 g/m$^3$ und eine Schmelzfließrate (MFR$_2$) von 0,2 bis 3,0 g/10 min hat und daß das multimodale Polyolefin zumindest einen ersten und einen zweiten Polyolefinanteil umfaßt, wobei der erste Anteil entweder (a) eine Dichte von 0,930 bis 0,975 g/cm$^3$ und eine Schmelzfließrate (MFR$_2$) von 50 bis 2000 g/10 min oder (b) eine Dichte von 0,88 bis 0,93 g/cm$^3$ und eine Schmelzfließrate (MFR$_2$) von 0,01 bis 0,8 g/10 min hat.

**6.** Kabel nach Anspruch 5, wobei das multimodale Polyolefin ein Dichte von 0,920 bis 0,950 g/cm$^3$ und eine MFR$_2$ von 0,2 bis 2,0 g/10 min hat und der erste Polyolefinanteil eine Dichte von 0,955 bis 0,975 g/cm$^3$ und eine MFR$_2$ von 100 bis 1000 g/10 min hat.

**7.** Kabel nach Anspruch 5 oder 6, wobei das multimodale Polyolefin durch eine koordinativ katalysierte Polymerisation in zumindest zwei Stufen von Ethylen zusammen mit einem α-Olefin-Comonomer mit 3 bis 12 Kohlenstoffatomen in zumindest einer der Stufen erhalten worden ist.

**8.** Kabel nach Anspruch 7, wobei das Comonomer aus der Gruppe ausgewählt ist, die aus 1-Buten, 1-Hexen, 4-Methyl-1-penten und 1-Octen besteht.

**9.** Kabel nach Anspruch 8, wobei die Polymerisationsstufen als Suspensionspolymerisation, Gasphasenpolymerisation oder eine Kombination davon betrieben werden.

**10.** Kabel nach Anspruch 9, wobei die Polymerisation in einem Verfahren aus Reaktor mit geschlossenem Kreis/Gasphasenreaktor in zumindest einem Reaktor mit geschlossenem Kreis, gefolgt von zumindest einem Gasphasenreaktor durchgeführt wird,

**11.** Kabel nach einem der vorstehenden Ansprüche, wobei das multimodale Polyolefin eine umgebungsbeeinflußte Spannungsrißbildung (ESCR) gemäß ASTM D 1693 A/10 % Igepal von F10 > 8000 h, F1 > 700 h hat.

**12.** Zusammensetzung für eine Isolations/Mantel-Kombination eines optischen Unterwasser-Verstärkerkabels, **dadurch gekennzeichnet, daß** sie ein multimodales Polyolefin mit einer Dichte von 0,910 bis 0.960 g/cm$^3$ und einer MFR$_2$ von 0,2 bis 6,0 g/10 min umfaßt und daß sie frei von Partikeln mit einer Abmessung von mehr als 0,5 mm in einer 1 kg Probe des Materials ist.

**13.** Zusammensetzung nach Anspruch 12, wobei das multimodale Polyolefin durch einen Filter mit 40 bis 250 μm Filteröffnungen filtriert worden ist

**14.** Zusammensetzung nach Anspruch 12 oder 13, wobei das multimodale Polyolefin durch Polymerisation von zumindest einem Olefin in zumindest zwei Stufen erhalten worden ist und eine Dichte von 0,915 bis 0,955 g/cm$^3$ und eine Schmelzfließrate (MFR$_2$) von 0,1 bis 3,0 g/10 min hat und daß das multimodale Polyolefin zumindest einem ersten und einen zweiten Polyolefinanteil umfaßt, wobei der erste Anteil entweder (a) eine Dichte von 0,930 bis 0,975 g/cm$^3$ und eine Schmelzfließrate (MFR$_2$) von 50 bis 2000 g/10 min oder (b) eine Dichte von 0,88 bis 0,93 g/cm$^3$ und eine Schmelzfließrate (MFR$_2$) von 0,01 bis 0,8 g/10 min hat.

**15.** Zusammensetzung nach einem der Ansprüche 12 bis 14, wobei das multimodale Polyolefin aus Ethylen- und Propylen-(Co)polymeren ausgewählt ist.

**16.** Zusammensetzung nach einem der Ansprüche 12 bis 15, wobei das multimodale Polyolefin bimodal ist.

**Revendications**

**1.** Câble à relais sous-marin en fibres optiques doté d'une combinaison d'isolation/gainage, **caractérisé en ce que** la combinaison d'isolation/gainage comprend une polyoléfine multimodale ayant une masse volumique de 0,910 à 0,960 g/cm$^3$ et un MFR$_2$ de 0,2 à 6,0 g/10 min, et **en ce que** la combinaison d'isolation/gainage est exempte de particules ayant une dimension supérieure à 0,5 mm dans un échantillon de 1 kg de matériau.

**2.** Câble selon la revendication 1, dans lequel la polyoléfine multimodale a été filtrée sur un filtre ayant des ouvertures de filtre de 40 à 250 μm

**3.** Câble selon la revendication 1 ou 2, dans lequel la polyoléfine multimodale est choisie parmi les (co)polymères d'éthylène et de propylène.

**4.** Câble selon l'une quelconque des revendications 1 à 3, dans lequel la polyoléfine multimodale est bimodale.

**5.** Câble selon l'une quelconque des revendications 1 à 4, dans lequel la polyoléfine multimodale a été obtenue par polymérisation d'au moins une oléfine dans au moins deux étages et a une masse volumique de 0,915 à 0,955 g/cm$^3$ et un taux de fluidité (MFR$_2$) de 0,2 à 3,0 g/10 min, la polyoléfine multimodale comprend au moins une première et une deuxième fractions de polyoléfine, parmi lesquelles la première fraction a soit (a) une masse volumique de 0,930 à 0,975 g/cm$^3$ et un taux de fluidité (MFR$_2$) de 50 à 2 000 g/10 min, soit (b) une masse volumique de 0,88 à 0,93 g/cm$^3$ et un taux de fluidité (MFR$_2$) de 0,01 à 0,8 g/10 min.

**6.** Câble selon la revendication 5, dans lequel la polyoléfine multimodale a une masse volumique de 0,920 à 0,950 g/cm$^3$ et un MFR$_2$ de 0,2 à 2,0 g/10 min, et la première fraction de polyoléfine a une masse volumique de 0,955 à 0,975 g/cm$^3$ et un MFR$_2$ de 100 à 1 000 g/10 min.

**7.** Câble selon la revendication 5 ou 6, dans lequel la polyoléfine multimodale a été obtenue par polymérisation, catalysée avec un élément de coordination, dans au moins deux étages, d'éthylène conjointement avec un comonomère d'α-oléfine ayant 3-12 atomes de carbone dans au moins l'un des étages.

**8.** Câble selon la revendication 7, dans lequel le comonomère est choisi dans le groupe constitué par le 1-butène, le 1-hexène, le 4-méthyl-1-pentène, et le 1-octène.

**9.** Câble selon la revendication 8, dans lequel les étages de polymérisation ont été mis en oeuvre sous la forme d'une polymérisation en suspension, d'une polymérisation en phase gazeuse, ou d'une de leurs combinaisons.

**10.** Câble selon la revendication 9, dans lequel la polymérisation a été mise en oeuvre dans un procédé avec un réacteur en boucle/réacteur en phase gazeuse dans au moins un réacteur en boucle suivi d'au moins un réacteur en phase gazeuse.

**11.** Câble selon l'une quelconque des revendications précédentes, dans lequel la polyoléfine multimodale a une résistance à la fissuration sous contrainte environnementale (ESCR) conformément à la norme ASTM D 1693 A avec de l'Igepal à 10 %, de F10 > 8000 h, F1 > 700 h.

12. Composition pour une combinaison d'isolation/gainage d'un câble à relais sous-marin en fibres optiques, **caractérisée en ce qu'**elle comprend une polyoléfine multimodale ayant une masse volumique de 0,910 à 0,960 g/cm$^3$ et un MFR$_2$ de 0,2 à 6,0 g/10 min, et **en ce qu'**elle est exempte de particules ayant une dimension supérieure à 0,5 mm dans un échantillon de 1 kg de matériau.

13. Composition selon la revendication 12, dans laquelle la polyoléfine multimodale a été filtrée sur un filtre ayant des ouvertures de filtre de 40 à 250 $\mu$m.

14. Composition selon la revendication 12 ou 13, dans laquelle la polyoléfine multimodale a été obtenue par polymérisation d'au moins une oléfine dans au moins deux étages et a une masse volumique de 0,915 à 0,955 g/cm$^3$ et un taux de fluidité (MFR$_2$) de 0,1 à 3,0 g/10 min, la polyoléfine multimodale comprend au moins une première et une deuxième fractions de polyoléfine, parmi lesquelles la première fraction a soit (a) une masse volumique de 0,930 à 0,975 g/cm$^3$ et un taux de fluidité (MFR$_2$) de 50 à 2000 g/10 min, soit (b) une masse volumique de 0,88 à 0,93 g/cm$^3$ et un taux de fluidité (MFR$_2$) de 0,01 à 0,8 g/10 min.

15. Composition selon l'une quelconque des revendications 12 à 14, dans laquelle la polyoléfine multimodale est choisie parmi les (co)polymères d'éthylène et de propylènes.

16. Composition selon l'une quelconque des revendications 12 à 15, dans laquelle la polyoléfine multimodale est bimodale.